# EUROPEAN PATENT APPLICATION

(11) **EP 2 998 813 A1**
(43) Date of publication of application: **23.03.2016**
(21) Application number: 14797667.4
(22) Date of filing: 09.05.2014
(51) Int. Cl.: G05B 23/02

(54) **MONITORING SYSTEM AND DIAGNOSTIC DEVICE AND MONITORING TERMINAL THEREOF**

(30) Priority: 15.05.2013 JP 2013103103
(71) Applicant: NTN Corporation, Osaka-shi, Osaka 550-0003 (JP)
(72) Inventor: TAKADA, Seiichi, Kuwana-shi Mie 511-8678 (JP); ADACHI, Kenro, Kuwana-shi Mie 511-8678 (JP)
(74) Representative: Behrmann, Niels
(86) International application number: PCT/JP2014/062445
(87) International publication number: WO 2014/185346

(57) **Abstract**

Provided is a monitoring system including a diagnostic device (2), a monitoring terminal (3), and a measurement device (4) with communication function connected via a communication network (1), thereby allowing a measurement condition and a diagnosis condition to be easily changed through the monitoring terminal, and allowing appropriate measurement and diagnosis even when a usage condition of a monitor subject is changed. The diagnostic device (2) includes: a diagnosis module (17) for performing malfunction diagnosis for a monitor subject (5) based on measurement data in accordance with a diagnosis condition; and a diagnosis condition changing module (19) which allows the diagnosis condition to be changed from the monitoring terminal (3). The monitoring terminal (3) generates and transmits the measurement condition instruction information (F1) to the measurement device (4), and transmits a diagnosis condition (F2) to the diagnostic device (2).

## Description

### CROSS REFERENCE TO THE RELATED APPLICATION

This application is based on and claims Convention priority to Japanese patent application No. 2013-103103, filed May 15, 2013, the entire disclosure of which is herein incorporated by reference as a part of this application.

### BACKGROUND OF THE INVENTION

### (Field of the Invention)

The present invention relates to a monitoring system which diagnoses from a remote place a malfunction of a monitor subject such as a bearing or a drive device, the state of which has been periodically measured, and, and a diagnostic device and a monitoring terminal therein. The present invention also relates to a technique of allowing diagnosis according to the monitor subject and allowing detailed monitoring.

### (Description of Related Art)

Patent Document 1 below proposes an example of a system that measures the state of a machine present at a remote place and manages data of the measurement. In this system, measurement data received for malfunction determination is compared with a threshold value, to diagnose malfunction of the machine.

### [Related Document]

### [Patent Document]

[Patent Document 1] JP Laid-open Patent Publication No. 2002-8179

### SUMMARY OF THE INVENTION

According to Patent Document 1 above, the measurement data is stored in a server via the Internet, and a measurement value of a monitor subject or an object to be monitored is compared with a threshold value to detect the state thereof, and thus the state can also be seen on a terminal.

However, regarding malfunction of a monitor subject, a level at which it is determined that malfunction has occurred may vary depending on difference in a usage condition or difference in a usage method because of process change or the like, even if the same monitor subject is measured. In this case, it is necessary to change the threshold value or a measurement cycle, but it takes effort to change the threshold value by a change through software provided in a diagnostic device, or change a measurement cycle by a change through software of a measurement device provided on the monitor subject.

In addition, there is a problem that it is impossible to perform measurement for state confirmation at an unscheduled time. Further, even if the change is allowed, if any person is allowed to perform the change, management cannot be performed.

Although it is also proposed that the threshold value is specified based on the measurement data, the same problem as described above arises.

An object of the present invention is to provide: a monitoring system and a diagnostic device and a monitoring terminal therein, which monitoring system includes a measurement device with communication function, the diagnostic device, and the monitoring terminal, in which a measurement condition and a diagnosis condition can be easily changed through the monitoring terminal, so that appropriate measurement and diagnosis can be performed even if a usage condition or the like of a monitor subject is changed;.

Hereinafter, for convenience of easy understanding, description of the present invention will be given with reference to the reference characters in embodiments.

A monitoring terminal 3 having such a configuration provides an effect of allowing a measurement condition and a diagnosis condition to be easily changed through the monitoring terminal 3, and thereby enabling appropriate measurement and diagnosis to be performed even if a usage condition or the like of a monitor subject 5 is changed, as described above with regard to the monitoring system of the present invention.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is an explanation diagram showing a conceptual configuration, operation, and the like of a monitoring system according to an embodiment of the present invention; and
Fig. 2 is a block diagram of a conceptual configuration of the monitoring system.

### DESCRIPTION OF EMBODIMENTS

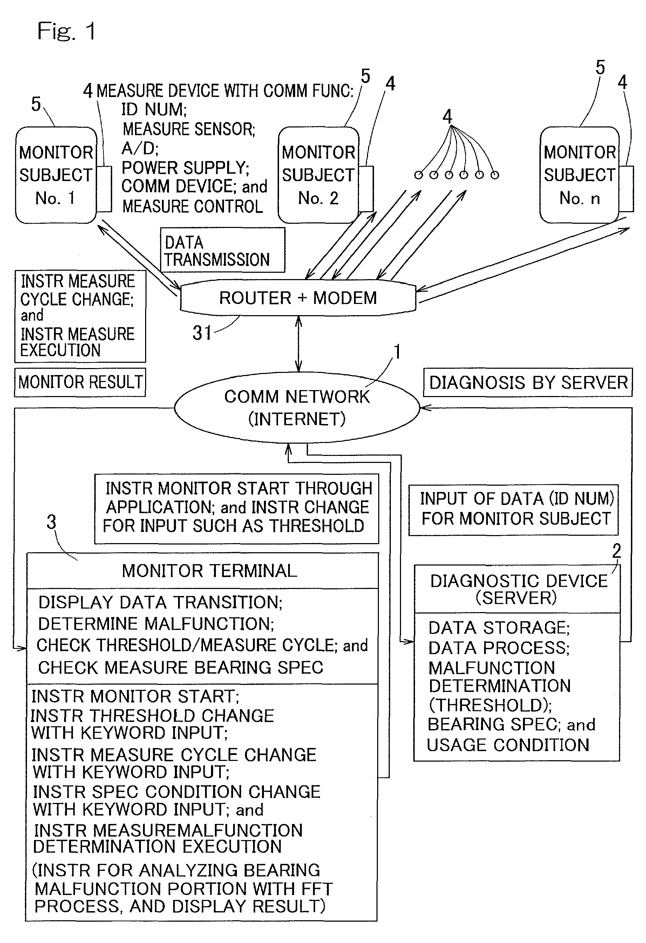

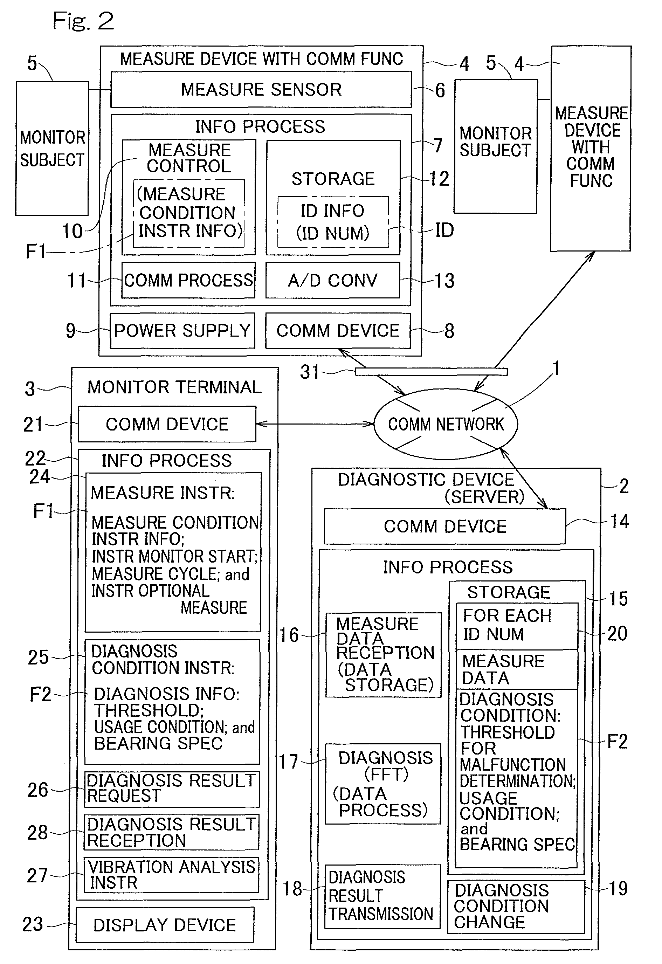

An embodiment of the present invention will be described with reference to Fig. 1 and Fig. 2. In Fig. 1, this monitoring system includes a diagnostic device 2, a monitoring terminal 3, and a plurality of measurement devices 4 with communication function, which are connected to each other via a communication network 1. Wordings shown in Fig. 1 indicate a summary of means and processes that the diagnostic device 2 and the monitoring terminal 3 have.

The communication network 1 is a wide-area computer communication network such as the Internet. The measurement device 4 with communication function is a device for measuring a monitor subject 5. The monitor subject 5 is a machine component such as a bearing or a motor, and more specifically, for example, a main shaft bearing or the like of a machine tool. The monitor subject 5 may be a main shaft bearing of a wind power generator, a bearing for supporting nacelle turning, a bearing of a speed increaser, a gear transmission part of a speed increaser, or the like. In the example shown in Fig. 2, the plurality of measurement devices 4 with communication function are connected to a communication control device 31 composed of a router, a modem, and the like via a common LAN (local area network), and are connected to the communication network 1 formed by the Internet via the communication control device 31. The LAN may be a wired type or a wireless type, or may be formed by combination of a wired configuration and a wireless configuration. The communication control device 31 is not limited to a stationary router and a stationary modem provided independently, but may be a portable communication terminal which performs wireless communication with each measurement device 4 with communication function using WiFi or the like, and mobile communication, i.e., so-called portable communication with the communication network 1. The portable communication terminal as the communication control device 31 may be, besides a terminal dedicated for data communication, a mobile phone such as a smartphone having a function of performing wireless communication with each measurement device 4 with communication function using Bluetooth (registered trademark) and performing mobile communication with the communication network 1. The plurality of measurement devices 4 with communication function which are connected via the LAN are for measuring the monitor subjects 5 placed at one factory or a common site, for example. In Fig. 1, one pair of such plural measurement devices 4 with communication function which are connected via the LAN are shown. However, plural measurement devices 4 with communication function may be connected to the communication network 1. Alternatively, the measurement device 4 with communication function may alone be connected to the communication network 1.

As shown in Fig. 2, the measurement device 4 with communication function includes a measurement sensor 6, an information processing module 7, a communication device 8, and a power supply device 9. The measurement sensor 6 is, for example, a vibration sensor which measures vibration of the monitor subject 5, and in this example, outputs measurement data as an analog signal. The measurement sensor 6 may be an AE sensor which measures acoustic emission, or a temperature sensor. Each measurement device 4 with communication function may include several types of sensors described above. The communication device 8 may establish connection with the communication network 1 via the communication control device 31.

The information processing module 7 is formed of a microcomputer or the like, and includes a measurement control module 10, communication processing module 11, storage 12, and an A/D converter 13.

The measurement control module 10 causes measurement by the measurement sensor 6 to be performed every specified measurement cycle, and allows a measurement condition including the measurement cycle or the time interval between measurements to be changed based on measurement condition instruction information F1. In this example, the measurement condition instruction information F1 includes the measurement cycle, a monitoring start instruction for starting measurement, and an optional-time measurement instruction for causing measurement to be performed at an unscheduled time other than the measurement time determined from the measurement cycle. The measurement cycle or the time interval between measurements is specified with a given time period, such as several minutes, several hours, or one day. A period during which one measurement is continued may be a constant period specified for the measurement control module 10 or the like, or the measurement continuation period may also be specified in the measurement condition instruction information F1. For example, the measurement control module 10 may include a timer (not shown), and may be configured such that the measurement control module 10 is normally in a sleep state, and when a set time comes, the measurement control module 10 is automatically activated to cause the measurement sensor 6 to perform measurement and cause the communication processing module 11 to transfer measurement data to the diagnostic device 2, and then goes into a sleep state again.

The communication processing module 11 is configured to: transmit measurement data measured by the measurement sensor 6 to the diagnostic device 2 via the communication device 8; and receive the measurement condition instruction information F1 transmitted from the monitoring terminal 3, through the communication device 8, to forward the measurement condition instruction information F1 to the measurement control module 10. In particular, the measurement data which has been analog data outputted from the measurement sensor 6, is converted to digital data by the A/D converter 13. Then, the communication processing module 11 transmits the measurement data the communication network 1. The communication processing module 11 transmits the measurement data with identification information ID added thereto, which includes an ID number stored in the storage 12. The transmission of measurement information by the communication processing module 11 may be performed every time the measurement is performed, or may be performed in response to a request signal from the diagnostic device 2 or the monitoring terminal 3. The identification information ID identifies the monitor subject 5, and thus identifies the measurement device 4 with communication function.

The storage 12 stores the identification information ID and measurement information ID. In the case where information measured by the measurement sensor 6 is stored so as to be transmitted as necessary, the storage 12 is also used for such storage of the measurement data.

The diagnostic device 2 is formed of a computer functioning as a server, and includes a communication device 14 which performs communication with the communication network 1, and an information processing module 15. The information processing module 15 includes a measurement data reception module 16, a diagnosis module 17, a diagnosis result transmission module 18, a storage 20, and a diagnosis condition changing module 19. Each modules 16 to 19 composing the information processing module 15, excluding the storage 20, is functionally configured by the computer composing the diagnostic device 2, and an application program (not shown) executed on an OS (operation program) of the computer.

The measurement data reception module 16 receives measurement data transmitted from the measurement device 4 with communication function, and stores the measurement data in the storage 20 such that the measurement data is stored in a discriminated manner for each identification information ID.

The diagnosis module 17 is configured to perform data processing of measurement data, i.e., malfunction diagnosis for the monitor subject 5 based on the measurement data, in accordance with a specified diagnosis condition F2. In this diagnosis, in the case where the measurement data includes vibration measurement data, vibration analysis is performed by, for example, a frequency analysis such as FFT, and if a frequency component greater than a threshold value exists, malfunction diagnosis is performed by estimation of a fault portion in a bearing, OA (overall) value determination based on a threshold value, or the like. Without limitation to the vibration analysis by frequency analysis, the diagnosis module 17 may perform malfunction diagnosis by another method.

The diagnosis condition changing module 19 changes a specified diagnosis condition to be used by the diagnosis module 17, in accordance with the diagnosis condition F2 transmitted from the monitoring terminal 3. The diagnosis condition F2 includes a threshold value for malfunction determination, a usage condition of the monitor subject 5, and the specifications of the monitor subject 5 (for example, in the case where the monitor subject 5 is a bearing, the bearing specifications). The "usage condition" is, for example, a rotation speed of a bearing, a load applied to a bearing, or the like. The bearing specifications include a bearing type, a main dimension of the bearing, bearing data, a sealing shape, a retainer shape, and the like. The diagnosis module 17 is configure to perform data processing of performing various calculations and diagnoses based on the diagnosis condition F2. A diagnosis result obtained through diagnosis by the diagnosis module 17 is stored into the storage 20 in a discriminated manner for each the identification information ID.

The diagnosis result transmission module 18 transmits the diagnosis result obtained from the diagnosis module 17 to the monitoring terminal 3 via the communication device 14. The diagnosis result transmission module 18 has a function of transmitting the diagnosis result to the monitoring terminal 3 in response to a diagnosis result request signal transmitted from the monitoring terminal 3. In this case, the diagnosis result about the measurement data from the measurement device 4 with communication function specified by the identification information ID indicated in the diagnosis result request signal is extracted from the diagnosis results stored in the storage 15, and the extracted diagnosis result is transmitted. Besides such transmission in response to the diagnosis result request signal, the diagnosis result transmission module 18 may transmit the diagnosis result to the monitoring terminal 3 when diagnosis is finished, for example.

The monitoring terminal 3 is formed of a personal computer or the like, and includes a communication device 21, an information processing module 22, and a display device 23. The communication device 21 is configured to communicate with the communication network 1. The display device 23 is a device, such as a liquid crystal display, for displaying an image. Besides these, the monitoring terminal 3 has input device (not shown) such as a keyboard or a mouse.

The information processing module 22 functionally includes a measurement instruction module 24, a diagnosis condition instruction module 25, a diagnosis result request module 26, and a diagnosis result reception module 27, which are realized by the computer of the monitoring terminal 3 and a monitoring program (not shown) which is an application program to be executed on an OS of the computer.

The measurement instruction module 24 generates the measurement condition instruction information F1 and transmits the generated measurement condition instruction information F1 to the measurement device 4 with communication function. As described above, the measurement condition instruction information F1 includes a monitoring start instruction, a measurement cycle, and an optional-measurement instruction. These can be inputted by means of the input device (not shown) such as a keyboard, or may be read from a storage medium or the like (not shown).

The diagnosis condition instruction module 25 generates the diagnosis condition F2 and transmits the generated diagnosis condition F2 to the diagnostic device 2. As described above, the diagnosis condition F2 includes a threshold value, a usage condition, and monitor subject specifications (bearing specifications). These can be inputted by means of the input device (not shown) such as a keyboard, or may be read from a storage medium or the like (not shown).

The measurement instruction module 24 and the diagnosis condition instruction module 25 output a screen that requests input of a keyword, to a screen of the display device 23, check whether or not an inputted keyword satisfies a permission condition, and then, only when the inputted keyword satisfies the permission condition, permits change of the measurement condition instruction information and change of the diagnosis condition, respectively. The keyword may be comprised of alphanumeric characters. The permission condition may not necessarily require that the inputted keyword entirely matches a registered keyword, but the permission may be given when the inputted keyword contains a registered character string, for example.

The diagnosis result reception module 27 receives the diagnosis result from the diagnostic device 2, and displays the diagnosis result on the screen of the display device 23.

The diagnosis result request module 26 transmits, to the diagnostic device 2, a diagnosis result request signal including the identification information ID assigned to each measurement device 4 with communication function. The diagnosis result request signal is, for example, generated based on input by means of the input device such as a keyboard, and transmitted with a predetermined input.

Besides the above, the monitoring terminal 3 includes a vibration analysis instruction module 28 which transmits a vibration analysis instruction to the diagnostic device 2. In the case where the diagnosis module 17 of the diagnostic device 2 can perform vibration analysis as described above, the diagnosis module 17 has a function of performing vibration analysis in more detail than in an ordinary malfunction diagnosis, in response to the vibration analysis instruction. For example, the vibration analysis instruction module 28 gives an instruction for analyzing a bearing malfunction part using FFT to the monitoring terminal 3, and in response to this instruction, the monitoring terminal 3 causes the diagnostic device 2 to perform vibration analysis and transmit a result of the vibration analysis to the monitoring terminal 3, and then causes the display device 23 to display the result.

Operation and effect in the monitoring system configured as described above will be described. First, an observer (user) opens an application program installed on the monitoring terminal 3, sets the measurement diagnosis condition F2 such as a usage condition and internal specifications of the monitor subject 5 and a threshold value for malfunction determination, and the measurement condition instruction information F1 such as a measurement cycle, and gives a monitoring start instruction which is included in the measurement condition instruction information F1. Thus, the measurement device 4 with communication function, which is mounted on the monitor subject 5 and has the identification information ID, periodically obtains measurement data of vibration or the like of the monitor subject 5, and transmits the measurement data to the diagnostic device 2 composed of a server, via the communication network 1 such as the Internet.

In the diagnostic device 2, based on an installed application program, the measurement data and the diagnosis information F2 are stored in a discriminated manner for each identification information ID, and as the data processing by the diagnosis module 17, calculation is performed based on the diagnosis condition F2 such as bearing specifications and a bearing usage condition, and a threshold value, to perform malfunction determination. A result of the malfunction determination is reported to the monitoring terminal 3 and displayed thereon, whereby malfunction of the monitor subject 5 is monitored.

If change such as operation method change is performed in the monitor subject 5 and therefore it becomes necessary to change a threshold value, a measurement cycle, a usage condition, and/or the like, a specific manager who knows a keyword activates an application program on the monitoring terminal 3, to perform the change. In addition, by this application program, it is possible to, for example, when it is determined that malfunction has occurred, give a vibration analysis instruction to the diagnostic device 2 to perform the analysis, or when an observer desires to perform confirmation, optionally give a measurement instruction from the monitoring terminal 3 to perform measurement and malfunction determination.

According to this monitoring system, as described above, it is possible to, after measuring vibration or the like of the monitor subject 5 by the measurement device 4 with communication function as in conventional case, receive and store the measurement data via the Internet into the diagnostic device 2 composed of a server, compare the measurement data with an initially specified threshold value to detect malfunction, and check a result thereof on the monitoring terminal 3.

Since keyword input is needed, only a specific manager can change the threshold value for the monitor subject 5, and it is possible to, at an unscheduled time other than an ordinary measurement timing, give a measurement instruction from the monitoring terminal 3 to check the state of the monitor subject 5.

According to this monitoring system, since even a user can change the threshold value for malfunction detection for the monitor subject 5 even after the system is started, even if a usage condition of the monitor subject 5 is changed and therefore a level for malfunction determination is changed, it is possible to cope with such a situation without rewriting software.

Since change of the threshold value is performed through keyword input, only a specific manager who knows the keyword can perform the change, and therefore it is possible to perform management while preventing the threshold from being unnecessarily changed.

In this monitoring system, with a specified cycle, measurement of the monitor subject 5 is performed and the diagnostic device 2 composed of a server stores the measurement data and further detects malfunction of the monitor subject through threshold value comparison. Besides such a measurement timing, it is possible to check the current state when a measurement instruction is transmitted from the monitoring terminal 3. Therefore, it becomes easy to recognize the state of the monitor subject 5.

Although the preferred embodiments have been described with reference to the accompanying drawings, those skilled in the art will readily conceive numerous changes and modifications within the framework of obviousness upon the reading of the specification herein presented of the present invention. Accordingly, such changes and modifications are to be construed as included in the scope of the present invention as delivered from the claims annexed hereto.

### [Reference Numerals]

- 1: communication network
- 2: diagnostic device
- 3: monitoring terminal
- 4: measurement device with communication function
- 5: monitor subject
- 6: measurement sensor
- 10: measurement control module
- 11: communication processing module
- 16: measurement data reception module
- 17: diagnosis module
- 18: diagnosis result transmission module
- 20: diagnosis condition changing module
- 24: measurement instruction module
- 25: diagnosis condition instruction module
- 26: diagnosis result request module
- 27: diagnosis result reception module
- F1: measurement condition instruction information
- F2: diagnosis condition

## Claims

1. A monitoring system comprising a diagnostic device, a monitoring terminal, and a plurality of measurement devices with communication function, which are connected to each other via a communication network, wherein
each measurement device includes:
a measurement sensor configured to measure a state of a monitor subject;
a measurement control module configured to cause the measurement by the measurement sensor to be performed every specified measurement cycle, and configure to allow a measurement condition including the measurement cycle to be changed based on measurement condition instruction information; and
a communication processing module configured to transmit measurement data measured by the measurement sensor to the diagnostic device, and configured to receive the measurement condition instruction information from the monitoring terminal and send the measurement condition instruction information to the measurement control module,
the diagnostic device includes:
a measurement data reception module configured to receive and store the measurement data transmitted from a measurement device of the measurement devices;
a diagnosis module configured to perform malfunction diagnosis of a monitor subject associated with the measurement device based on the stored measurement data in accordance with a specified diagnosis condition;
a diagnosis condition changing module configured to allow the specified diagnosis condition to be changed based on a diagnosis condition transmitted from the monitoring terminal; and
a diagnosis result transmission module configured to transmit a diagnosis result of diagnosis performed by the diagnosis module to the monitoring terminal, and
the monitoring terminal includes:
a measurement instruction module configured to generate the measurement condition instruction information and transmit the generated measurement condition instruction information to a measurement device of the measurement devices;
a diagnosis condition instruction module configured to generate the diagnosis condition and transmit the generated diagnosis condition to the diagnostic device; and
a diagnosis result reception module configured to receive the diagnosis result from the diagnostic device and cause a display device to display the received diagnosis result.

2. The monitoring system as claimed in claim 1, wherein
the measurement condition instruction information transmitted to the measurement device by the monitoring terminal includes a monitoring start instruction for starting the measurement, the measurement cycle, and an optional time measurement instruction for causing the measurement to be performed at an unscheduled time other than the time determined from the measurement cycle, and
the diagnosis condition transmitted to the diagnostic device by the monitoring terminal includes a threshold value for malfunction determination in the malfunction diagnosis by the diagnosis module.

3. The monitoring system as claimed in claim 2, wherein
the monitoring terminal further includes a diagnosis result request module configured to transmit, to the diagnostic device, a diagnosis result request signal including identification information associated with each measurement device, and
the diagnosis result transmission module of the diagnostic device transmits, to the monitoring terminal, a diagnosis result as to measurement data from a measurement device specified by the identification information in the diagnosis result request signal.

4. The monitoring system as claimed in claim 2 or 3, wherein
the measurement instruction module and the diagnosis condition instruction module of the monitoring terminal each check whether or not an inputted keyword satisfies a permission condition, and only when the inputted keyword satisfies the permission condition, permit change of the measurement condition instruction information and change of the diagnosis condition, respectively.

5. A diagnostic device connected to a monitoring terminal and a plurality of measurement devices with communication function via a communication network, the diagnostic device comprising:
a measurement data reception module configured to receive and store measurement data transmitted from a measurement device of the measurement devices;
a diagnosis module configured to perform malfunction diagnosis of a monitor subject associated with the measurement device based on the stored measurement data in accordance with a specified diagnosis condition;
a diagnosis condition changing module configured to allow the specified diagnosis condition to be changed based on a diagnosis condition transmitted from the monitoring terminal; and
a diagnosis result transmission module configured to transmit a diagnosis result of diagnosis performed by the diagnosis module to the monitoring terminal.

6. A monitoring terminal connected to a measurement device with communication function and a diagnostic device via a communication network, the monitoring terminal comprising:
a measurement instruction module configured to generate measurement condition instruction information and transmit the generated measurement condition instruction information to the measurement device;
a diagnosis condition instruction module configured to generate a diagnosis condition and transmit the generated diagnosis condition to the diagnostic device; and
a diagnosis result reception module configured to receive the diagnosis result from the diagnostic device and cause a display device to display the received diagnosis result.
